Europäisches Patentamt

European Patent Office

Office européen des brevets

(11) Veröffentlichungsnummer: **0 468 983 B1**

(12) **EUROPÄISCHE PATENTSCHRIFT**

(45) Veröffentlichungstag der Patentschrift: **01.06.94**

(21) Anmeldenummer: **90905457.9**

(22) Anmeldetag: **30.03.90**

(86) Internationale Anmeldenummer:
**PCT/EP90/00503**

(87) Internationale Veröffentlichungsnummer:
**WO 90/12702 (01.11.90 90/25)**

(51) Int. Cl.⁵: **B60L 3/10**

(54) **REGELSYSTEM.**

(30) Priorität: **21.04.89 DE 3913059**

(43) Veröffentlichungstag der Anmeldung:
**05.02.92 Patentblatt 92/06**

(45) Bekanntmachung des Hinweises auf die
Patenterteilung:
**01.06.94 Patentblatt 94/22**

(84) Benannte Vertragsstaaten:
**CH DE FR LI SE**

(56) Entgegenhaltungen:
**EP-A- 89 899**
**DE-A- 2 922 529**
**US-A- 4 075 538**

**ELEKTRISCHE BAHNEN vol. 79, no. 9, September 1981, MUENCHEN, DE Seiten 325 - 330; W. NIEMEYER: "K-MIKRO - EIN MIKROPROZESSOR-GLEITSCHUTZ FUER DEN MODERNEN BAHNBETRIEB"**

(73) Patentinhaber: **ROBERT BOSCH GMBH**
**Postfach 30 02 20**
**D-70442 Stuttgart(DE)**

(72) Erfinder: **SCHÄFER, Jochen**
**Belchenweg 18**
**D-7140 Ludwigsburg(DE)**
Erfinder: **FRANK, Thomas**
**Platanenweg 13**
**D-7145 Markgröningen(DE)**
Erfinder: **BEDERNA, Frank**
**Pforzheimerstrasse 17**
**D-7145 Markgröningen(DE)**

# Beschreibung

## Stand der Technik

Bei der Antriebsschlupfregelung wird bekanntlich bei durchdrehenden Rädern die Radbremse betätigt und/oder das Antriebsmoment des Motors zurückgenommen. Bei dem gesamten Vorgang durchläuft die Radgeschwindigkeit ein Maximum und verzögert danach. Diese Verzögerung kann man dazu benutzen, die weitere Erhöhung der Einwirkungen zur Reduzierung des Antriebsschlupfs zu beenden oder die Einwirkung zu verringern, also z.B. den Bremsdruck nicht mehr zu erhöhen bzw. ihn gar abzubauen bzw. z.B. die Drosselklappe nicht weiter zurückzunehmen oder gar den Drosselklappenwinkel zu erhöhen.

Die Gewinnung des Verzögerungssignals ist dann kritisch, wenn Rad- und Achsschwingungen auftreten und dem gemessenen Radgeschwindigkeitssignal eine Störung überlagert ist. Obwohl das Rad insgesamt verzögert, werden zeitweise sogar große Radbeschleunigungen festgestellt. Um Fehlreaktionen zu vermeiden, muß die Störung ausgefiltert werden.

Aus der US-A 40 75 538 ist ein Radschlupfregelverfahren für ein sich bewegendes Objekt bekannt, bei dem Beschleunigungs- oder Verzögerungsänderungen durch Überwachen der Geschwindigkeit des Objekts erkannt werden. Es wird eine Durchschnittbeschleunigung- bzw. verzögerung aus der Geschwindigkeit abgeleitet und dann die herrschende Beschleunigung/Verzögerung mit der Durchschnittsgröße verglichen. Bei einer vorgegebenen Abweichung wird ein Regelsignal gebildet.

## Vorteile der Erfindung

Die im Anspruch 1 beschriebene Erfindung zeigt eine wirkungsvolle Gewinnung eines gefilterten Signals z.B. des Verzögerungssignals im ASR-Fall auf, die auch bei großen Störungen ein werwertbares Nutzsignal liefert. Weitere Ausbildungen der Erfindung sind in dem Unteransprüchen beschrieben.

## Figurenbeschreibung

Fig. 1 zeigt ein Blockschaltbild eines Ausführungsbeispiels

Fig. 2 Daigramme zur Erläuterung

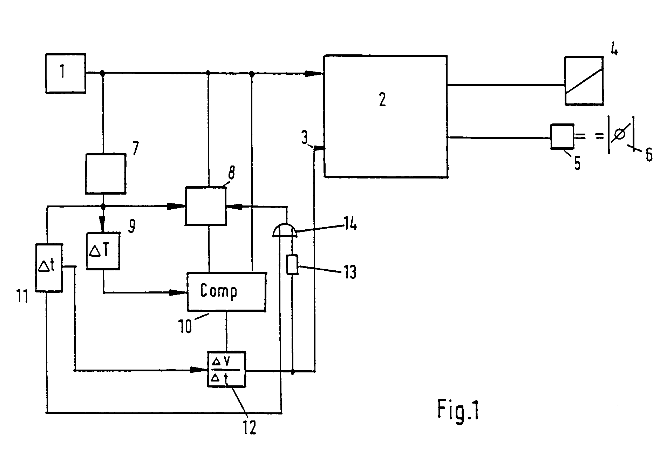

In der Fig. 1 der Zeichnung ist mit 1 ein Geschwindigkeitssensor eines angetriebenen Rad samt digitaler Auswertung bezeichnet, der sein Signal an eine Auswerteschaltung 2 liefert. Aus diesem Signal, dem Signal eines dem zweiten angetriebenen Rad zugeordneten, nicht gezeigten Gebers, den Signalen von den nicht angetriebenen Räder zugeordneten, nicht gezeigten Gebern und dem über Leitung 3 zugeführten Signal sowie dem entsprechenden Signal des anderen angetriebenen Signals erzeugt die Auswerteschaltung 2 Steuersignale für Bremsdrucksteuerventile 4, von denen nur eines gezeigt ist und für einen Verstellmotor für eine Drosselklappe 6. Es wird z.B. Bremsdruck eingesteuert, wenn eines der Räder einen Antriebsschlupf vorgegebener Größe übersteigt und es wird das Motormoment verkleinert, wenn beide Räder einen entsprechenden Antriebsschlupf aufweisen. Druckabbau soll eingeleitet werden, wenn das gebremste Rad ein Signal über Leitung 3 einkoppelt bzw. das Motormoment wird wieder erhöht, wenn von beiden Rädern ein Signal entsprechend dem auf Leitung 3 auftritt.

Über Leitung 3 wird ein Signal eingekoppelt, wenn die Radverzögerung einen vorgegebenen kleinen Verzögerungswert überschreitet, d.h. die Radverzögerung gegen 0 geht. Dieses Signal soll auch fehlerfrei erzeugt werden, wenn dem Signal des Gebers ein Störsignal überlagert ist.

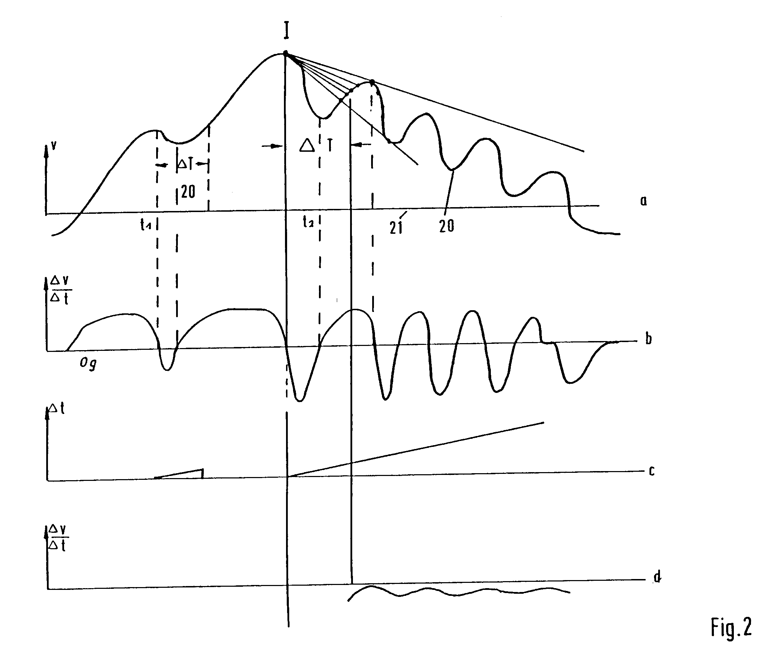

Fig. 2a) zeigt den Verlauf 20 eines Regelzyklus eines solchen gestörten Geschwindigkeitssignals. Man erkennt, daß, obwohl das Rad insgesamt verzögert, Phasen starker Radbeschleunigungen auftreten. Ein ungefiltertes Signal würde fehlerhafte Beeinflussungen auslösen. Die Fig. 2b, die die Radbeschleunigung zeigt, bestätigt diese Aussage.

In einem Block 7 wird in jedem Meßintervall der digitalen Geschwindigkeitsmessung im Block 1 geprüft, ob nach vorher ansteigender Geschwindigkeit die Geschwindigkeitsänderung 0 oder negativ wird. Ist dies der Fall, so wird der Geschwindigkeitswert in einem Speicher 8 als Maximalwert abgespeichert. Dies ist z.B. im Zeitpunkt $t_1$ der Fig. 2a der Fall. Nach einer durch ein Zeitglied 9 vorgegebenen Zeit $\Delta T$ ab Abspeicherung wird ein Vergleicher 10 aktiviert, der den Speicherwert des Speichers 8 mit dem Augenblickswert des Geschwindigkeitssignals vergleicht.

Mit der Abspeicherung wurde auch ein Zeitzähler 11 aktiviert, der den nacheinander auftretenden Geschwindigkeitsdifferenzen $\Delta V$ in einem Block 12 jeweils ein $\Delta t$ (Zeitraum zwischen Abspeicherung und dem augenblicklichen Differenz) zuordnet, d.h. $\frac{\Delta V}{\Delta t}$ bildet. Da das erste nach $t_1 + \Delta T$ gebildete $\Delta V/\Delta t = \Delta V/\Delta T$ größer als der in einem Vergleicher 13 vorgegebene kleine Schwellwert ist, erzeugt dieser ein Signal, das den Speicher 8 löscht.

In dem Block 7 kann noch eine Ansprechschwelle entsprechend der Kurve 21 in Fig. 2 vorgegeben sein, um die Filterung nur ab einer gewissen Größe des Geschwindigkeitssignals durchzuführen.

Zum Zeitpunkt $t_2$ wird wieder ein Maximalwert im Speicher 8 gespeichert. Nach der Zeit $\Delta T$ wird nun zu jedem Meßzeitpunkt der Radgeschwindigkeit der Quotient des vom Vergleicher 10 kommenden $\Delta V$ und des vom Zähler 11 kommenden $\Delta t$ im Block 12 gebildet und der Auswerteschaltung 12 zugeführt. Dieser Quotient entspricht der jeweiligen Steigung der vom Punkt I ausgehenden Geraden, die innerhalb eines Trichters liegen. Alle ermittelten Steigungen sind negativ, obwohl starke Beschleunigungen des Rads auftreten. Wenn entweder der Zähler 11 einen Endwert erreicht (z.B. 1 sec) oder der Wert für $\Delta V/\Delta t$ einen kleinen Wert von z.B. ca. 0,06 km/h/5 msec überschreitet, wird über ein Oder-Gatter 14 der Speicher 8 gelöscht und es beginnt einen neue Suche nach einem Maximum.

In Fig. 2c sind noch die Inhalte des Speichers 11 gezeigt und in Fig. 2d die durch die Filterung erreichten Werte der Radverzögerung, die gegenüber den ungefilterten Werten der Fig. 2b deutlich verbessert sind.

**Patentansprüche**

1. Regelverfahren, bei dem die Ableitung eines Meßsignals als Regelgröße zumindest mit verwendet wird und das Meßsignal innerhalb eines Regelzyklus einen Extremwert einnimmt, wobei die Regelgröße einer Filterung unterworfen wird, dadurch gekennzeichnet, daß der Extremwert abgespeichert wird und nach einer vorgegebenen Filterzeit $\Delta T$ fortlaufend aus dem Unterschied $\Delta V$ zwischen dem Extremwert und dem augenblicklichen Meßsignalwert und der Zeitdauer $\Delta t$ zwischen dem Auftreten des Extremwerts und des augenblicklichen Meßwerts die Steigung $\Delta V/\Delta t$ des Meßsignals ermittelt und als Regelgröße benutzt wird.

2. Regelverfahren nach Anspruch 1, dadurch gekennzeichnet, daß die Ermittlung der Steigung unter Verwendung des Extremwerts nur wirksam ist, wenn der Betrag der Meßgröße eine Schwelle überschreitet.

3. Regelverfahren nach Anspruch 1 oder 2, dadurch gekennzeichnet, daß die Filterzeit $\Delta T$ größer als die halbe Periodendauer der erwarteten Frequenz eines Störsignals ist.

4. Regelverfahren nach einem der Ansprüche 1-3, dadurch gekennzeichnet, daß die Regelgröße mit einem Schwellwert verglichen wird und ab Überschreiten des Schwellwerts ein Eingriffssignal erzeugt wird.

5. Regelverfahren nach einem der Ansprüche 1-4, dadurch gekennzeichnet, daß ein Eingriffssignal erzeugt wird, wenn die Zeit $\Delta t$ eine vorgegebene Schwelle überschreitet.

6. Regelverfahren nach einem der Ansprüche 1-5, dadurch gekennzeichnet, daß die Steigung mit einem kleinen Verzögerungsschwellwert verglichen wird, und daß auf Aufsuchen eines neuen Extremwerts umgeschaltet wird, wenn der Verzögerungsschwellwert überschritten wird.

7. Regelverfahren nach einem der Ansprüche 1-6, dadurch gekennzeichnet, daß auf Aufsuchen eines neuen Extremwerts umgeschaltet wird, wenn seit dem Auftreten des letzten Extremwerts eine vorgegebene Zeitdauer abgelaufen ist.

8. Regelverfahren nach einem der Ansprüche 1-7, gekennzeichnet durch seine Anwendung bei der Schlupfregelung von Fahrzeugrädern (ASR und/oder ABR).

**Claims**

1. Control method in which the derivative of a measurement signal is used to form at least part of the regulating variable and the measurement signal assumes an extreme value within a control cycle, the regulating variable being subjected to filtering, characterized in that the extreme value is stored and, after a specified filtering time $\Delta T$, the slope $\Delta V/\Delta t$ of the measurement signal is determined continuously from the difference $\Delta V$ between the extreme value and the instantaneous value of the measurement signal and from the time $\Delta t$ between the occurrence of the extreme value and of the instantaneous measured value and used as a regulating variable.

2. Control method according to Claim 1, characterized in that the determination of the slope using the extreme value is operative only when the absolute value of the measured variable exceeds a threshold.

3. Control method according to Claim 1 or 2, characterized in that the filtering time $\Delta T$ is greater than half the period of the expected frequency of a disturbance signal.

4. Control method according to one of Claims 1-3, characterized in that the regulating variable is compared with a threshold value and an intervention signal is produced as soon as the threshold value is exceeded.

5. Control method according to one of Claims 1-4, characterized in that an intervention signal is produced when the time Δt exceeds a specified threshold.

6. Control method according to one of Claims 1-5, characterized in that the slope is compared with a small deceleration threshold value and in that the system switches to finding a new extreme value if the deceleration threshold value is exceeded.

7. Control method according to one of Claims 1-6, characterized in that the system switches to finding a new extreme value if a specified time has expired since the occurrence of the last extreme value.

8. Control method according to one of Claims 1-7, characterized by its use in the slip control of vehicle wheels (traction control and/or ABS).

**Revendications**

1. Procédé de régulation selon lequel on utilise au moins la dérivée d'un signal de mesure comme grandeur de régulation et le signal de mesure prend une valeur extrême intérieure d'un cycle de régulation, les grandeurs de régulation étant filtrées, procédé caractérisé en ce qu'on met en mémoire la valeur extrême et, après un temps de filtrage ΔT prédéterminé, à partir de la différence ΔV entre la valeur extrême et la valeur instantanée du signal de mesure et de la durée Δt entre l'arrivée de la valeur extrême et la valeur de mesure instantanée, on détermine en continu la pente ΔV/Δt du signal de mesure et on utilise cette grandeur comme grandeur de régulation.

2. Procédé de régulation selon la revendication 1, caractérisé en ce que la détermination de la pente en utilisant la valeur extrême n'est active que lorsque la valeur de la grandeur de mesure dépasse un seuil.

3. Procédé de régulation selon la revendication 1 ou 2, caractérisé en ce que le temps de filtrage ΔT est supérieur à la demi-période de la fréquence prévisible d'un signal parasite.

4. Procédé de régulation selon l'une des revendications 1 - 3, caractérisé en ce que la grandeur de régulation est comparée à une valeur de seuil et elle génère un signal d'action à partir du déplacement de la valeur de seuil.

5. Procédé de régulation selon l'une des revendications 1 - 4, caractérisé en ce qu'on génère un signal d'action lorsque le temps Δt dépasse un seuil prédéterminé.

6. Procédé de régulation selon l'une des revendications 1 - 5, caractérisé en ce qu'on compare la pente à une petite valeur de seuil de décélération et en ce qu'on passe à la recherche d'une nouvelle valeur extrême lorsque la valeur de seuil de décélération est dépassée.

7. Procédé de régulation selon l'une des revendications 1 - 6, caractérisé en ce qu'on commute sur la recherche d'une nouvelle valeur extrême si depuis l'arrivée de la dernière valeur extrême, un temps prédéterminé a passé.

8. Procédé de régulation selon l'une des revendications 1 - 7, caractérisé par son application à la régulation du patinage de roue de véhicule (régulation ASR et/ou ABR).

Fig.1

Fig.2

EP 0 468 983 B1